(19) Europäisches Patentamt / European Patent Office / Office européen des brevets

(11) **EP 2 031 607 B1**

(12) **EUROPEAN PATENT SPECIFICATION**

(45) Date of publication and mention
of the grant of the patent:
**07.03.2012 Bulletin 2012/10**

(51) Int Cl.:
*H01F 1/09* (2006.01)    *B22F 1/00* (2006.01)
*C01B 21/06* (2006.01)    *G11B 5/712* (2006.01)
*G11B 5/714* (2006.01)    *H01F 1/06* (2006.01)

(21) Application number: **07745321.5**

(22) Date of filing: **08.06.2007**

(86) International application number:
**PCT/JP2007/062066**

(87) International publication number:
**WO 2007/145301 (21.12.2007 Gazette 2007/51)**

(54) **IRON NITRIDE-BASED MAGNETIC POWDER, PROCESS FOR PRODUCING THE SAME, AND MAGNETIC RECORDING MEDIUM**

AUF EISENNITRID BASIERENDES MAGNETPULVER, HERSTELLUNGSPROZESS DAFÜR UND MAGNETISCHES AUFZEICHNUNGSMEDIUM

POUDRE MAGNETIQUE A BASE DE NITRURE DE FER, SON PROCESSUS DE FABRICATION, ET SUPPORT D'ENREGISTREMENT MAGNÉTIQUE

(84) Designated Contracting States:
**DE FR GB**

(30) Priority: **14.06.2006 JP 2006165010**

(43) Date of publication of application:
**04.03.2009 Bulletin 2009/10**

(73) Proprietor: **DOWA Electronics Materials Co., Ltd.**
**Chiyoda-ku**
**Tokyo 101-0021 (JP)**

(72) Inventors:
• **ISHIKAWA, Yuzo**
  **Aichi 444-0063 (JP)**
• **MASADA, Kenji**
  **Tokyo 101-0021 (JP)**

(74) Representative: **Emde, Eric**
**Wagner & Geyer**
**Gewürzmühlstrasse 5**
**80538 München (DE)**

(56) References cited:
EP-A- 1 548 760    EP-A- 1 623 779
EP-A- 1 675 135    JP-A- 5 222 483
JP-A- 60 076 105    JP-A- 60 221 325
JP-A- 2005 093 570    JP-A- 2006 041 210
US-A- 4 791 021    US-A1- 2004 089 564

**Description**

TECHNICAL FIELD

The present invention relates to an iron nitride-based magnetic powder for use for high-recording density magnetic recording media, particularly to the powder having improved antiaging magnetic properties and having excellent weatherability.

BACKGROUND ART

As a magnetic powder having excellent magnetic properties suitable for high-density recording media, known is an iron nitride-based magnetic powder having a main phase of $Fe_{16}N_2$. For example, Patent Reference 1 discloses an iron nitride-based magnetic material having a large specific surface area that exhibits a high coercive force (Hc) and a high saturation magnetization ($\sigma s$), teaching that the material can realize good magnetic properties regardless of the shape thereof, due to the synergistic effect between the crystal magnetic anisotropy of the $Fe_{16}N_2$ phase and the enlarged specific surface area of the magnetic powder.

Patent Reference 2 discloses an improved magnetic powder over the technique of Patent Reference 1, including an essentially spherical or oval rare earth element-iron-boron-based, rare earth element-iron-based or rare earth element-iron nitride-based magnetic powder; and this teaches that a tape medium produced using such a powder has excellent properties.

Patent Reference 3 discloses production of an iron nitride-based magnetic powder that comprises a main phase of $Fe_{16}N_2$. through ammonia treatment of a reduced powder obtained by reduction of an iron oxide, in which goethite carrying a solid solution of Al therein is used as the iron oxide. This solves the pending problems in the prior art of powdering, or that is, the problems in that powdering into particles having a particle size of at most 20 nm brings about undesirable particle size distribution and poor dispersibility, and when the powdered particles are used as a magnetic powder in coating-type magnetic recording media, the media could hardly have an enhanced power, a reduced noise and an increased C/N ratio.

Patent Reference 1: JP-A 2000-277311
Patent Reference 2: WO03/079333
Patent Reference 3: JP-A 2005-268389
Patent Reference 4: JP-A 11-340023

Further, reference is made to US 4 791 021 A, which discloses ferromagnetic particles comprising iron nitride particles comprising iron oxide on the surface thereof in which the content of iron oxide ($FeO_x$, $4/3 \leq x \leq 3/2$) is from 0.5 to 10 % based on iron nitride ($Fe_4N$).

Furthermore, JP 5 222 483 A discloses a soft magnetic material comprising an iron nitride based high density sintered compound, which is obtained by a process comprising forming $Fe_4N$ or $Fe_{16}N_2$ on the outer portion of powder particles of iron or iron alloy by a nitriding treatment of the particles, thereby forming a spinel-type magnetic oxide on the surface of the resultant particles, and sintering the resultant particles.

PROBLEMS THAT THE INVENTION IS TO SOLVE

Like the technique in Patent reference 3, it has now become possible to provide a high-quality iron nitride-based magnetic powder suitable for high-recording density magnetic materials. In future, therefore, it will be more important to impart excellent "weatherability" to the powder of which the magnetic properties are deteriorated little even in long-term use. For example, when a computer storage tape is produced using an iron nitride-based magnetic powder that greatly deteriorates with time, there occurs a phenomenon that Hc and $\sigma s$ thereof decrease with time. When Hc decreases, then the information recorded on the magnetic powder could not be stored, and there occurs a problem of information loss. When $\sigma s$ decreases, then the information recorded on the magnetic powder could not be read out, therefore causing a problem of information loss. Even though high-density recording is possible, the information loss is fatal to storage tapes, and therefore, it is an extremely important condition to impart excellent "weatherability" to magnetic powders.

However, an iron nitride-based magnetic powder having a main phase of $Fe_{16}N_2$ could not be said to be so good in point of weatherability, and a technique to overcome this point is not as yet established. In consideration of the current situation as above, the present invention is to provide a novel iron nitride-based magnetic powder that satisfies various properties of the iron nitride-based magnetic powder improved according to the technique of Patent Reference 3, and additionally has a remarkably improved weatherability.

DISCLOSURE OF THE INVENTION

In accordance with the present invention, an iron nitride-based magnetic powder as set forth in claim 1, a method for producing such iron nitride-based magnetic powder as set forth in claim 2 and a magnetic recording medium as set forth in claim 3 is provided.

The present inventors have assiduously studied and, as a result, have found that, for significantly improving the weatherability of an iron nitride-based magnetic powder, it is extremely effective to gradually reduce the surface layer of an iron nitride phase of a powder particle to thereby once form a metal Fe phase, and then gradually oxidize the metal Fe phase from the surface side thereof to thereby yield a powder particle having a "metal Fe phase-derived oxide phase" formed on the outer side of the iron nitride phase core.

Specifically, in the invention, there is provided an iron nitride-based magnetic powder that comprises magnetic particles having a mean particle size of at most 20 nm and each having a core of a main phase of $Fe_{16}N_2$ and an oxide phase outside the core, of which the relationship between the weatherability index $\Delta\sigma s$ and the saturation magnetization $\sigma s$ satisfies the following formula (1). The oxide phase is, for example, derived from a metal Fe phase, concretely including one that mainly comprises a spinel phase. The metal Fe phase includes one formed as a result of reduction of a part of iron oxide constituting the particle. In one preferred embodiment, the metal Fe phase exists, as remaining between the oxide phase and the core that comprises a main phase of $Fe_{16}N_2$.

$$\Delta\sigma s \leq 0.8 \times \sigma s - 30 \ldots (1)$$

wherein $\Delta\sigma s$ is defined by the following formula (2):

$$\Delta\sigma s = (\sigma s - \sigma s_1)/\sigma s \times 100 \ldots (2)$$

wherein,

$\sigma s$ means the saturation magnetization of the magnetic powder ($Am^2/kg$).
$\sigma s_1$ means the saturation magnetization of the magnetic powder kept in an atmosphere of 60°C and 90 % RH for 1 week ($Am^2/kg$).

"Main phase of $Fe_{16}N_2$" means that the intensity ratio thereof, $I_1/I_2$, of the peak intensity $I_1$ detected at around $2\theta = 50.0°$ to the peak intensity $I_2$ detected at around $2\theta = 52.4°$ in the X-ray diffractiometric pattern of the powder with a Co-K$\alpha$ ray, falls within a range of from 1 to 2. In this, $I_1$ is the peak intensity of the (202) face of the $Fe_{16}N_2$ phase, and $I_2$ is the intensity of the peak at which the peak of the (220) face of the $Fe_{16}N_2$ phase overlaps with the peak of the (110) face of the Fe phase.

"Oxide phase derived from metal Fe phase" means a phase of the oxide formed through oxidation of a metal Fe phase.

Not detracting from the object of the invention, the iron nitride-based magnetic powder may contain at least one element of Co, Al, rare earth elements (Y is also within the scope of rare earth elements), W, Mo and others. For example, in terms of the atomic ratio to Fe, Co is allowable in an amount of at most 30 atomic %, Al and rare earth elements (Y is also within the scope of rare earth elements) are in an amount of at most 25 atomic % in total, and W and Mo are in an amount of at most 10 atomic % each. However, the total content of other elements than N is preferably at most 50 atomic % in terms of the atomic ratio to Fe. Regarding the morphology of those elements existing in the powder, they may adhere to the core surface, or may exist inside the core as a solid solution therein. The atomic ratio of the element X (Co, Al, rare earth elements, W, Mo) to Fe as referred to herein means the ratio of the amount of the element X to that of Fe in the powder, expressed as an atomic %. Concretely, based on the amount of X (atomic %) and the amount of Fe (atomic %) determined through quantitative analysis of the powder, the value defined according to the following formula (3) is employed.

$$X/Fe \; atomic \; ratio = [amount \; of \; X \; (atomic \%)/amount \; of \; Fe \; (atomic \%)] \times 100 \ldots (3)$$

For producing the iron nitride-based magnetic powder, the invention provides a method for producing an iron nitride-based magnetic powder that comprises exposing powder particles having a main phase of $Fe_{16}N_2$ to a reducing gas to partly reduce the region of the surface of the particle thereby giving powder particles having a metal Fe phase in the surface layer thereof (gradual reduction) followed by exposing them to an oxidizing gas to oxidize at least partly the metal Fe phase thereby giving powder particles having an oxide phase in the outermost layer thereof (gradual oxidation). "Powder particles" mean the individual particles constituting the powder. Thus obtained, the iron nitride-based magnetic powder may be used for the magnetic layer of magnetic recording media according to conventional known methods.

The invention has made it possible to provide an iron nitride-based magnetic powder for high-recording density magnetic media, which is significantly improved in point of the magnetic properties thereof not deteriorating with time in long-term use, or that is, the powder having excellent "weatherability". Accordingly, the invention contributes toward improving the durability and the reliability of high-recording density magnetic media and electronic appliances with the medium mounted thereon.

BRIEF DESCRIPTION OF THE DRAWINGS

Fig. 1 is a schematic view showing the cross-sectional structure of a particle constituting the iron nitride-based magnetic powder of the invention.

Fig. 2 is a graph showing the relationship between σs and Δσs of the iron nitride-based magnetic powders of Examples and Comparative Examples.

BEST MODE FOR CARRYING OUT THE INVENTION

As described above, an iron nitride-based magnetic powder having a main phase of $Fe_{16}N_2$ exhibits excellent magnetic properties, but its magnetic properties may be deteriorated with time relatively with ease, and its weatherability could not be said to be naturally so good. The reason may be because the $Fe_{16}N_2$ phase has a crystal structure of a semi-stable phase, and the crystal structure itself may be unstable. In general, an oxide film exists in the surface of an iron nitride particle having a main phase of $Fe_{16}N_2$, in which, however, the $Fe_{16}N_2$ phase highly tends to be an iron oxide that could exist more stably; and therefore, it may be presumed that the oxygen atom in the oxide film may readily diffuse inside the $Fe_{16}N_2$ phase. Specifically, it may be said that the powder particle having a main phase of $Fe_{16}N_2$ could be readily oxidized inside it. The progress of the oxidation of the $Fe_{16}N_2$ phase, which is a magnetic phase, naturally deteriorates the magnetic properties of the powder particle. For these reasons, it may be considered that the weatherability of the iron nitride-based magnetic powder having a main phase of $Fe_{16}N_2$ is naturally not so good. In other words, even though the iron nitride-based magnetic power is desired not to be oxidized by oxygen in air by forming an oxide film formed around the powder particle, oxygen diffuses into the magnetic phase from the oxide film itself, and therefore, it has heretofore been extremely difficult to improve the weatherability of the powder.

In the invention, the film structure of the surface of the particle is made to differ from the structure of the conventional iron nitride-based magnetic powder, whereby the weatherability of the iron nitride magnetic phase therein is significantly improved.

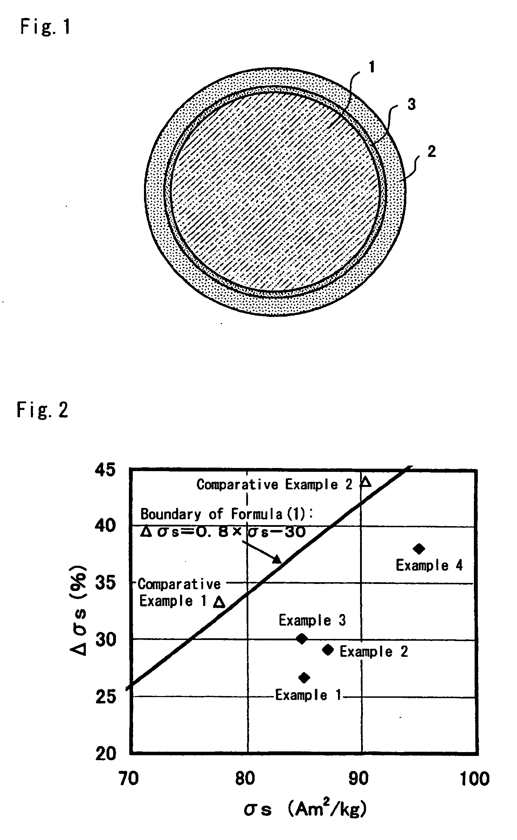

Fig. 1 schematically shows the cross-sectional structure of a particle that constitutes the iron nitride-based magnetic powder of the invention. The center of the particle is a core 1 comprising a magnetic phase of mainly an $Fe_{16}N_2$ phase, and an oxide phase 2 exists outside the core 1 as the outermost layer. A metal Fe phase 3 exists between the core 1 and the oxide phase 2 as an interlayer. The oxide phase 2 of the outermost layer and the underlying metal Fe phase 3 constitute a double-layered coating structure, and it may be considered that the specific coating film structure may significantly improve the weatherability of the iron nitride-based magnetic powder. At present, it is not clear whether the interlayer of the metal Fe phase 3 may exist in the entire interface between the core 1 and the oxide phase 2; but it may be considered that the interlayer may have a function of evading or greatly reducing the direct contact between the core 1 that is a magnetic phase of mainly an $Fe_{16}N_2$ phase and the oxide phase 2. As a result, the oxygen atom in the oxide phase 2 may be prevented fromdif fusing into the core 1, and it may be presumed that a significant improvement of the weatherability of the particle can be realized.

The metal Fe phase may be considered to be α-Fe, and it may be formed by reducing the iron nitride phase itself of mainly an $Fe_{16}N_2$ phase that constitutes the particle, from its surface. The oxide phase of the outermost layer is one formed through oxidation of the metal Fe phase from its surface side, and for example, it is mainly a spinel structure. The interlayer of the metal Fe phase 3 in Fig. 1 is one having remained during formation of the oxide phase 2.

Regarding the size of the particle that constitutes the powder, the mean particle size is preferably at most 20 nm. When the mean particle size is more than 20 nm, then the weatherability of the powder tends to be good; however, when the powder is used in producing a tape, it may cause a noise and, in addition, its dispersibility may be poor and it may detract from the surface smoothness of the tape. Accordingly, the invention is directed to the powder having a mean particle size of at most 20 nm.

The iron nitride-based magnetic powder of the invention may be produced through "gradual reduction" and "gradual oxidation" applied to a powder of mainly an $Fe_{16}N_2$ phase obtained in a conventional known method (hereinafter referred to as "base powder"). One typical production method is described below.

[Production of Base Powder]

A base powder of mainly an $Fe_{16}N_2$ phase can be obtained typically by nitrogenation of an $\alpha$-Fe powder. One general production method for it is exemplified.

As a method for obtaining a fine $\alpha$-Fe powder having a particle size of at most 20 nm, for example, known is a method of reducing an iron oxyhydroxide powder. For producing the starting powder, iron oxyhydroxide, for example, an aqueous ferrous salt solution (aqueous solution of $FeSO_4$, $FeCl_2$, Fe $(NO_3)_2$) is neutralized with an alkali hydroxide (aqueous solution of NaOH or KOH), and then oxidized with air. An aqueous ferrous salt solution may be neutralized with an alkali carbonate and then oxidized with air. As the other method, an aqueous ferric salt solution (aqueous solution of $FeCl_3$) may be neutralized with NaOH to give iron oxyhydroxide.

In these production method, a sintering preventing element of Al, rare earth elements (Y is also within the scope of rare earth elements) may be present in the iron oxyhydroxide particles. Further, for improving the magnetic properties and the weatherability, Co may also be therein. For introducing them in the particles, an Al-containing salt, and a rare earth element or Co-containing salt may be present during the reaction of forming the iron oxyhydroxide. The Al-containing salt includes a water-soluble Al salt and an aluminate. The rare earth element includes a sulfate and a nitrate thereof. The Co-containing salt includes cobalt sulfate and cobalt nitrate.

Thus obtained, the iron oxyhydroxide, after being processed in a step of filtration and washing with water, is dried at a temperature not higher than 200°C and then reduced. As the case may be, the iron oxyhydroxide may be treated for dewatering at 200 to 600°C or may be treated for reduction in a hydrogen atmosphere having a moisture concentration of from 5 to 20 % by mass, thereby modifying the iron oxyhydroxide into an iron oxide particle, and the resulting oxide particles may be subjected to reduction. Not specifically defined, the powder to be subj ected to reduction may be any compound containing iron, oxygen and hydrogen, for which, therefore, usable are hematite, maghemite, magnetite, wustite and others, in addition to iron oxyhydroxide (goethite).

The method for reduction is not specifically defined, for which, in general, suitable is a dry method of using hydrogen ($H_2$). The reduction temperature in the dry method is preferably from 300 to 700°C, more preferably from 350 to 650°C. Multi-stage reduction may be employed, comprising the reduction into $\alpha$-Fe at the above reduction temperature followed by further reduction at an elevated temperature for increasing the crystallinity of the product.

According to a chemical liquid-phase method, an $\alpha$-Fe powder may be directly produced. In this case, the method includes a uniform precipitation method, a compound precipitation method, a metal alkoxide method and a hydrothermal synthesis method.

For producing nanoparticles, studies of an alcohol reduction method, a coprecipitation method, a reversed micelle method, a hot soap method and a sol-gel method are made actively these days; and the present inventors have confirmed that an $\alpha$-Fe powder produced according to an alcohol reduction method is usable in the invention.

For producing an $\alpha$-Fe powder according to an alcohol reduction method, for example, an aqueous ferrous salt solution (aqueous solution of $FeSO_4$, $FeCl_2$, $Fe(NO_3)_2$), an aqueous ferric salt solution (aqueous solution of $Fe_2(SO_4)_3$, $FeCl_3$, $Fe(NO_3)_3$), or an organic Fe complex (acetacetate iron) may be used as a starting material, and alcohols (hexanol, octanol) or polyalcohols (ethylene glycol, diethylene glycol, triethylene glycol and tetraethylene glycol) may be used as a reducing agent serving also as a solvent. In order not to aggregate the formed nanoparticles, a dispersing agent may be present in the reaction of forming them. Not specifically defined, the reaction temperature may be any one at which the starting material can be reduced, but is preferably not higher than the boiling point of the reducing agent serving also as a solvent used.

Next, $\alpha$-Fe is nitrogenated. Concretely, for example, the ammonia method described in Patent Reference 4 can be applied to it. Specifically, an $\alpha$-Fe powder is put into a reactor, and kept therein for several tens of hours with a nitrogen-containing gas such as typically ammonia or a mixed gas that contains the nitrogen-containing gas in a ratio of at least 50 % by volume kept flowing therethrough at a temperature not higher than 200°C, whereby a powder of mainly an **$Fe_{16}N_2$** phase (base powder) can be obtained. In this case, the reaction may be attained under a pressure of at least 0.1 MPa. Preferably, the oxygen concentration, the hydrogen concentration and the moisture concentration in the reactor each are at most 0.1 % by volume, more preferably at most several hundred ppm.

It is effective to keep the N content of the base powder within a range of from 5 to 30 atomic % in terms of the atomic ratio thereof to Fe (atomic ratio of N/Fe), preferably from 10 to 30 atomic % or so by controlling the temperature, the time and the atmosphere for nitrogenation. When the atomic ratio of N/Fe is less than 5 atomic %, then the nitrogenation may be ineffective, and the powder could not exhibit satisfactory magnetic properties owing to the crystal magnetic anisotropy thereof. On the contrary, when the atomic ratio is more than 30 atomic %, then excessive nitrogenation may give any other phase than the $Fe_{16}N_2$ phase thereby worsening the magnetic properties of the powder.

[Gradual Reduction]

For obtaining the iron nitride-based magnetic powder of the invention, the base powder comprising the particles of mainly an $Fe_{16}N_2$ phase thus prepared in the manner as above is once reduced thereby forming a metal Fe phase ($\alpha$-Fe phase) in the surface of the powder particle. When the powder is reduced too much, then the proportion of the magnetic phase of mainly $Fe_{16}N_2$ may be small and the magnetic properties of the powder may be thereby worsened. Accordingly, it is important to control the reduction speed so that only the surface part of the magnetic phase of mainly $Fe_{16}N_2$ can be reduced. To that effect, the reduction is referred to as "gradual reduction" in this description.

Concretely, the base powder of iron nitride particles is exposed to a mixed gas of a reducing gas such as hydrogen ($H_2$) and an noninflammable gas such as nitrogen ($N_2$), whereby the particle is reduced only partly to a metal Fe phase from the surface of iron nitride thereof. The hydrogen/nitrogen mixed gas preferably has a hydrogen concentration of from 0.01 to 20 % by volume. When the hydrogen concentration is less than 0.01 % by volume, then it is unfavorable since the reduction may go on insufficiently or may be extremely slow. On the other hand, when the hydrogen concentration is more than 20 % by volume, then the reduction may go on rapidly, and it may be difficult to control a suitable reduction speed in processing fine particles having a mean particle size of at most 20 nm. More preferably, the hydrogen concentration is from 0.1 to 15 % by volume.

Regarding the temperature of the gradual reduction, when it is too high, then the reduction may occur rapidly and the reduction speed may be difficult to control; and therefore, the temperature is preferably not higher than 200°C, more preferably not higher than 150°C. However, at room temperature, the reaction may be slow, and therefore, it is desirable to heat the system to some degree. In many cases, a temperature of from 80 to 170°C or so may give good results. The gradual reduction time may be controlled within a range of from 15 to 300 minutes or so. The reduction speed control, namely for controlling the amount of the metal Fe to be formed in the surface layer of the iron nitride particle to what degree may be based on the criterion that the powder obtained may have a coercive force Hc of at least 200 kA/m or the tape comprising the powder may have a coercive force Hcx of at least 238 kA/m.

[Gradual Oxidation]

Next, at least a part of the metal Fe phase formed in the surface layer of the iron nitride particle is oxidized, thereby producing a powder particle having an oxide phase in the outermost layer thereof. In this stage, when the particle is subjected to oxidation to such a degree that the metal Fe phase thereof is entirely oxidized, then it is unfavorable since the underlying iron nitride phase may also be oxidized during the treatment. Accordingly, for improving the weatherability of the powder, it is important to control the oxidation speed to be so gentle that only a part of the metal Fe phase could be oxidized from its surface. To that effect, the oxidation is referred to as "gradual oxidation" in this description. Specifically, in the stage where the metal Fe phase still remains in the surface of the iron nitride phase core of mainly an $Fe_{16}N_2$ phase, the oxidation is stopped.

At present, a method of quantitative evaluation of the amount (thickness) of the metal Fe phase to remain between the iron nitride phase (core) and the oxide phase (outermost layer) as to how much the amount of the phase should be kept there between is not as yet established; but by controlling the gradual oxidation condition so as to satisfy the above-mentioned formula (1), a remarkable weatherability-improving effect can be attained heretofore unknown in the art. As a result of various investigations, the gradual oxidation can be realized by exposing the powder after reduction to an oxidizing gas. As the oxidizing gas, for example, employable is an oxygen/nitrogen mixed gas. In this case, the optimum condition ranges as follows: The oxygen concentration is from 0.01 to 2 % by volume; the temperature is from 40 to 120°C; and the treatment time is from 5 to 120 minutes.

Methods for measuring the characteristic data in the following Examples are described below.

[Composition Analysis]

In the magnetic powder, Fe is quantified, using a Hiranuma's automatic titration device by Hiranuma Sangyo (COMTIME-980). Al and the rare earth metals (Y is also within the scope of rare earth elements) in the magnetic powder are quantified, using a high-frequency induction plasma emission analyzer by Nippon Jarrell-Ash (IRIS/AP). The found data are in terms of % by mass. The proportion of every element thus quantified is once converted into a value thereof in terms of atomic %; and the atomic ratio of the element X to Fe (atomic ratio of X/Fe) is computed according to the above-mentioned formula (3).

[Mean Particle Size of Powder (nm)]

Of the particles seen on a transmission electromicroscope (TEM) picture taken at a magnification power of at least 100, 000 times, 1000 particles capable of being individually differentiated from each other at their boundaries except those that could not be differentiated as to whether or not 2 or more particles overlap or are sintered together, are analyzed to measure the longest diameter of each particle on the picture, and this is the particle size (nm) of each particle. The data are averaged to obtain the mean particle size of the particles.

[Specific Surface Area of Powder]

Measured according to a BET method.

[Magnetic Properties (coercive force Hc, saturation magnetization σs, squareness ratio SQ)]

Using VSM (Toei Industry's VSM-7P), the powder is analyzed in an external magnetic field of at most 796 kA/m. Concretely, an external magnetic field of 796 kA/m is applied to the powder in one direction (this is a positive direction), and then the external magnetic field is reduced to 0 at intervals of 7.96 kA/m, and thereafter a reversed magnetic field is applied thereto in the reversed direction (negative direction) at intervals of 7.96 kA/m, thereby drawing a hysteresis curve. From the hysteresis curve, Hc, σs and SQ are obtained. Squareness ratio SQ = residual magnetization σr/saturation magnetization σs.

[Conversion to $Fe_{16}N_2$ Phase]

Using an X-ray diffractiometer (Rigaku's RINT-2100), the magnetic powder is analyzed with a Co-Kα ray. At 40 kV and 30 mA, the sample is scanned within a range of 2θ = 20 to 60° at a scanning speed of 0.80°/min, and at a sampling width of 0.040°. In that condition, the X-ray diffraction pattern is obtained, on which the peak strength $I_1$ detected near 2θ = 50.0°, and the peak strength $I_2$ detected near 2θ = 52.4° are read. Based on the intensity ratio $I_1/I_2$ (mentioned above), the conversion to the $Fe_{16}N_2$ phase is determined. When $I_1/I_2$ = 2, then the conversion to the $Fe_{16}N_2$ phase in the powder is 100 %. When $I_1/I_2$ = 1, then the conversion to the $Fe_{16}N_2$ phase in the powder is 50 %.

[Method of Evaluation of Tape Properties]

[1] Preparation of Magnetic Coating Material:

0.500 g of the magnetic powder is taken, and put into a pot (inner diameter 45 mm, depth 13 mm). Not capped, this is left as such for 10 minutes. Next, 0.700 mL of a vehicle [mixed solution of a vinyl chloride-based resin MR110 (22 % by mass), cyclohexanone (38.7 % by mass), acetylacetone (0.3 % by mass), n-butyl stearate (0.3 % by mass) and methyl ethyl ketone (MEK, 38.7 % by mss)] is taken with a micropipette, and added to the above-mentioned pot. Immediately, 30 g of steel balls (2 φ) and 10 nylon balls (8 φ) are added to the pot, which is then capped and statically left as such for 10 minutes. Next, the pot is set in a centrifugal ball mill (FRITSCH P-6), and with gradually increasing the revolution speed and adjusting it at 600 rpm, this is dispersed for 60 minutes. After the centrifugal ball mill is stopped, the pot is taken out, andusingamicropipette, 1.800 mL of a preparation liquid previously prepared by mixing MEK and toluene in a ratio of 1/1 is added thereto. Again the pot is set in the centrifugal ball mill, and subjected to dispersion for 5 minutes at 600 rpm, and the dispersion is then ended.

[2] Production of Magnetic Tape:

After the dispersion is ended, the pot is opened, then the nylon balls are removed, and the coating material is put into an applicator (55 μm) along with the steel balls, and applied onto a supporting film (Toray's polyethylene film; trade name 15C-B500 having a film thickness of 15 μm). After being coated, the film is immediately put at the center of the coil of an aligner of 5.5 kG, and oriented in a magnetic field, and then dried.

[3] Test for Evaluation of Tape Properties:

Measurement of magnetic properties: Using a VSM, the obtained tape is analyzed in an external magnetic field of at most 796 kA/m, thereby determining the coercive force Hcx, the coercive force distribution SFDx, and the squareness ratio SQx thereof.

EXAMPLES

[Example 1]

0.5 L (L means a liter) of an aqueous NaOH solution (12 mol/L) and sodium aluminate to be in an amount of Al/Fe = 20 atomic % were added to 4 L of an aqueous $FeSO_4$ solution (0.2 mol/L), and while the liquid temperature was kept at 40°C, air was jetted into it at a flow rate of 300 mL/min for 2.5 hours, whereby an Al solid solution-bearing iron oxyhydroxide was precipitated out. After the oxidation, the precipitated iron oxyhydroxide was collected by filtration and washed with water, and again dispersed in water. Yttrium nitrate was added to the dispersion to be in an amount of Y/Fe = 1.0 atomic %, and at 40°C, an aqueous NaOH solution (12 mol/L) was added thereto for pH control to 7 to 8, thereby coating the particle surface with yttrium. Next, this was collected by filtration, washed with water and dried in air at 110°C.
As a result of composition analysis of the obtained powder, the atomic ratio of Al and Y to Fe was Al/Fe = 9.6 atomic %, and Y/Fe = 2.3 atomic %.
Thus obtained, the powder of mainly iron oxyhydroxide was put into a reactor, reduced with hydrogen gas at 650°C for 3 hours, and then cooled to 100°C. Accordingly, a powder of $\alpha$-Fe was obtained. At the temperature, the hydrogen gas was changed to ammonia gas, and this was again heated up to 130°C for nitrogenation for 20 hours. Accordingly, the $\alpha$-Fe was nitrogenated to give an iron nitride powder (base powder). From the result of X-ray diffractiometry mentioned below, the base powder is a powder of mainly an $Fe_{16}N_2$ phase.
After the above nitrogenation, the reactor was purged with nitrogen gas, and then a hydrogen/nitrogen mixed gas controlled to have a hydrogen concentration of 10 % by volume was introduced into it so that the powder particles were exposed to the mixed gas at 130°C for 20 minutes for "gradual reduction". Accordingly, an iron nitride powder of particles having a metal Fe phase in the surface layer thereof was obtained. Next, the reactor was purged with nitrogen gas and cooled to 80°C, and thereafter air was introduced into the nitrogen gas so as to have an oxygen concentration of 2 % by volume. The powder particles were exposed to the oxygen/nitrogen mixed gas at 80°C for 60 minutes for "gradual oxidation", whereby the metal Fe phase in the particle surface was oxidized from the surface side thereof. Accordingly, thus obtained was an iron nitride-based magnetic powder having an oxide phase derived from the metal Fe phase on the outer side of the core of mainly an $Fe_{16}N_2$ phase.
Thus obtained, the magnetic powder was identified as a magnetic powder of mainly an $Fe_{16}N_2$ phase as a result of X-ray diffractiometry thereof (the same shall apply to the following Examples and Comparative Examples).
A photographic picture of the particles of the magnetic powder was taken with a transmission electromicroscope at a magnification power of 174000 times, and the mean particle size was determined according to the above-mentioned method. In addition, also according to the above-mentioned methods, the BET specific surface area, Hc, σs, SQ and Δσs as a weatherability index of the powder were determined. For Δσs, the magnetic powder was kept in an atmosphere at 60°C and 90 % RH for 1 week (24 x 7 = 168 hours), then its saturation magnetization $\sigma s_1$ was measured, and Δσs of the powder was obtained according to the above-mentioned formula (2).
Further according to the above-mentioned method, a magnetic coating material comprising the magnetic powder was prepared, and using this, a magnetic tape was produced. The tape was analyzed for the tape properties, Hcx, SFDx and SQx.

[Example 2]

A magnetic powder was produced under the same condition as in Example 1, for which, however, the hydrogen concentration in the hydrogen/nitrogen mixed gas in "gradual reduction" in Example 1 was changed to 1.0 % by volume and the treatment time was 60 minutes; and this was analyzed in the same manner as in Example 1.

[Example 3]

A magnetic powder was produced under the same condition as in Example 1, for which, however, the hydrogen concentration in the hydrogen/nitrogen mixed gas in "gradual reduction" in Example 1 was changed to 0.1 % by volume and the treatment time was 180 minutes; and this was analyzed in the same manner as in Example 1.

[Example 4]

A magnetic powder was produced under the same condition as in Example 1, for which, however, "gradual reduction" in Example 1 was changed into those of Example 2, and further followed by "gradual oxidation" in which the reactor was purged with nitrogen gas and cooled to 60°C, and the powder particles were exposed to an oxygen/nitrogen mixed gas having an oxygen concentration of 2 % by volume at 60°C for 60 minutes; and this was analyzed in the same manner as in Example 1.

[Comparative, Example 1]

A magnetic powder was produced under the same condition as in Example 1, for which, however, "gradual reduction" in Example 1 was omitted; and this was analyzed in the same manner as in Example 1.

[Comparative Example 2]

A magnetic powder was produced under the same condition as in Example 1, for which, however, "gradual reduction" in Example 1 was omitted, and in "gradual oxidation", the reactor was purged with nitrogen gas and cooled to 60°C, and the powder particles were exposed to an oxygen/nitrogen mixed gas having an oxygen concentration of 2 % by volume at 60°C for 60 minutes; and this was analyzed in the same manner as in Example 1.

[Comparative Example 3]

A magnetic powder was produced under the same condition as in Example 1, for which, however, in "gradual reduction" in Example 1, the hydrogen concentration in the hydrogen/nitrogen mixed gas was changed to 50 % by volume; and this was analyzed in the same manner as in Example 1.

These results are shown in Table 1. The relationship between $\sigma s$ and $\Delta \sigma s$ is shown in Fig. 2.

Table 1

| Example No. | Gradual Reduction | | Gradual Oxidation | Powder Properties | | | | | | Tape Properties | | |
|---|---|---|---|---|---|---|---|---|---|---|---|---|
| | hydrogen concentration (vol.%) | time (min) | temperature (°C) | mean particle size (nm) | BET ($m^2$/g) | Hc (kA/m) | $\sigma s$ ($Am^2$/kg) | SQ | $\Delta\sigma s$ (%) | Hcx (kA/m) | SFDx | SQx |
| Example 1 | 10 | 20 | 80 | 17 | 69 | 228 | 85 | 0.52 | 27 | 274 | 0.722 | 0.74 |
| Example 2 | 1 | 60 | 80 | 17 | 67 | 224 | 87 | 0.52 | 29 | 270 | 0.707 | 0.74 |
| Example 3 | 0.1 | 180 | 80 | 17 | 68 | 229 | 85 | 0.52 | 30 | 278 | 0.689 | 0.74 |
| Example 4 | 1 | 60 | 60 | 17 | 68 | 231 | 95 | 0.53 | 38 | 286 | 0.641 | 0.76 |
| Comparative Example 1 | (omitted) | | 80 | 17 | 68 | 232 | 78 | 0.52 | 33 | 279 | 0.707 | 0.74 |
| Comparative Example 2 | (omitted) | | 60 | 17 | 69 | 236 | 90 | 0.53 | 44 | 286 | 0.641 | 0.76 |
| Comparative Example 3 | 50 | 20 | 80 | 17 | 69 | 172 | 94 | 0.49 | 23 | 220 | 1.142 | 0.74 |

The iron nitride-based magnetic powders of Examples, in which an oxide phase derived from a metal Fe phase was formed on the outer side of the core of mainly an $Fe_{16}N_2$ phase of the powder particles, had a mean particle size of at most 20 nm, and the tapes formed by the use of the powders had a coercive force Hcx of at least 238 kA/m and exhibited an extremely good magnetic property. The powders exhibited an excellent weatherability-enhancing effect in that the relationship between $\Delta\sigma s$ and $\sigma s$ thereof satisfied the above-mentioned formula (1). Specifically, the iron nitride-based magnetic powders of the invention realized a significant improvement of the weatherability thereof while maintaining their excellent magnetic properties.

As opposed to these, in Comparative Examples 1 and 2, "gradual reduction" was omitted, and therefore, an oxide phase not derived from a metal Fe phase was formed on the outer side of the core of mainly an $Fe_{16}N_2$ phase, and the powders formed did not satisfy the formula (1) and their weatherability was poor. In Comparative Example 3, the hydrogen concentration in the reduction, which was intended to correspond to "gradual reduction" in the present invention, was increased, and therefore, this was not "gradual reduction", and the surface layer part of the iron nitride particles would be much reduced to a metal Fe phase. As a result, the powder exhibited excellent weatherability after "gradual oxidation", but its coercive force Hc greatly decreased.

## Claims

1. An iron nitride-based magnetic powder for use in high recording density magnetic recording media, comprising magnetic particles having a mean particle size of at most 20 nm and each having a core of a main phase of $Fe_{16}N_2$, an oxide phase and a Fe phase, wherein the oxide phase is outside the core and derived from the metal Fe phase and the metal Fe phase results from reduction of iron nitride and exists between the oxide phase and the core phase of mainly $Fe_{16}N_2$, whose coercive force Hc is at least 200 kA/m and the relationship between the weatherability index $\Delta\sigma s$ and the saturation magnetization $\sigma s$ satisfies the following formula (1):

$$\Delta\sigma s \leq 0.8 \times \sigma s - 30 \ldots (1)$$

wherein $\Delta\sigma s$ is defined by the following formula (2):

$$\Delta\sigma s = (\sigma s - \sigma s_1) / \sigma s \times 100 \ldots (2)$$

wherein, $\sigma s$ means the saturation magnetization of the magnetic powder ($Am^2/kg$), $\sigma s_1$ means the saturation magnetization of the magnetic powder kept in an atmosphere of 60°C and 90 % RH for 1 week ($Am^2/kg$).

2. A method for producing the iron nitride-based magnetic powder of claim 1, which comprises preparing a base powder comprising mainly an $Fe_{16}N_2$ phase by a process comprising putting an $\alpha$-Fe powder into a reactor and keeping it therein for several tens of hours with a nitrogen-containing gas kept flowing at a temperature not higher than 200°C, performing gradual reduction by exposing the base powder particles having a main phase of $Fe_{16}N_2$ to a reducing gas to partly reduce the region of: the surface of the particles, thereby producing powder particles having a metal Fe phase in the surface layer thereof, followed by gradual oxidation by exposing the produced powder particles to an oxidizing gas to oxidize at least partly the surface of the metal Fe phase, thereby producing powder particles having an oxide phase in the outermost layer thereof.

3. A magnetic recording medium, wherein the magnetic layer comprises the iron nitride-based magnetic powder of claim 1.

## Patentansprüche

1. Ein auf Eisennitriden basierendes Magnetpulver, zur Verwendung bei einem magnetischen Aufzeichnungsmedium mit hoher Aufzeichnungsdichte, wobei Folgendes vorgesehen ist:

   Magnetteilchen mit einer mittleren Teilchengröße von höchstens 20 nm, und wobei jedes einen Kern einer Hauptphase von $Fe_{16}N_2$, einer Oxidphase und eine Fe Phase besitzt, wobei die Oxidphase außerhalb des Kerns ist, und abgeleitet ist aus der Metall-Fe-Phase und die Metall-Fe-Phase sich ergibt aus der Reduktion von Eisennitrid und existiert zwischen der Oxidphase und der Kernphase aus hauptsächlich $Fe_{16}N_2$, dessen Koerzitivkraft Hc mindestens 200 kA/m ist, und wobei die Beziehung zwischen dem Witterungsbeständigungsindex $\Delta\sigma s$ und der Sättiungsmagnetisierung $\sigma s$ der folgenden Formel (1) genügt:

$$\Delta\sigma s \ \leq 0{,}8 \ x \ \sigma s - 30 \ ... \ (1)$$

wobei $\Delta\sigma s$ definiert wird durch die folgende Formel (2):

$$\Delta\sigma s = (\sigma s - \sigma s_1) \ /\sigma s \ x \ 100 \ ... \ (2)$$

wobei $\sigma s$ die Sättiungsmagnetisierung des Magnetpulvers ($Am^2$/kg) ist, $\sigma s_1$ die Sättigungsmagnetisierung des Magnetpulvers bedeutet, dass in einer Atmosphäre von 60°C und 90% RH für 1 Woche ($Am^2$/kg) gehalten ist.

2. Ein Verfahren zur Herstellung des auf Eisennitriden basierenden Magnetpulvers nach Anspruch 1, wobei Folgendes vorgesehen ist:

Herstellen eines Basispulvers, welches hauptsächlich eine $Fe_{16}N_2$ Phase aufweist und zwar durch ein Verfahren welches vorsieht,
Eingeben eines $\alpha$-Fe Pulvers in einen Reaktor und Halten desselben darin für mehrere Zehner von Stunden, und zwar mit einem Stickstoff enthaltenden Gas, welches bei einer Temperatur von nicht mehr als 200°C fließenden Gas gehalten wird,
Durchführung einer allmählichen Reduktion, **dadurch** dass die Basispulverteilchen mit einer Hauptphase aus $Fe_{16}N_2$ einem Reduktionsgas ausgesetzt sind, um teilweise die Zone oder Region der Oberfläche der Teilchen zu reduzieren;
wodurch Pulverteilchen erzeugt werden mit einer Metall-Fe-Phase in der Oberflächenschicht davon und zwar gefolgt von einer graduellen Oxidation durch Aussetzen der erzeugten Pulverteilchen gegenüber einem Oxidationsgas zum mindestens teilweisen Oxidieren der Oberfläche der Metall-Fe-Phase, wodurch Pulverteilchen mit einer Oxidphase in der äußersten Schicht davon, erzeugt werden.

3. Ein magnetisches Aufzeichnungsmedium, wobei die magnetische Schicht das auf Eisennitrid basierende Magnetpulver nach Anspruch 1 enthält.

**Revendications**

1. Poudre magnétique à base de nitrure de fer pour utilisation dans des supports d'enregistrement magnétique à haute densité d'enregistrement, comprenant des particules magnétiques ayant une taille moyenne de particule d'au plus 20 nm et ayant chacune un coeur d'une phase principale de $Fe_{16}N_2$, une phase d'oxyde et une phase de Fe, la phase d'oxyde étant à l'extérieur du coeur et obtenue à partir de la phase Fe métallique, et la phase Fe métallique résultant de la réduction de nitrure de fer et existant entre la phase d'oxyde et la phase de coeur principalement composée de $Fe_{16}N_2$, dont la force coercitive Hc est d'au moins 200 kA/m et la relation entre l'indice de tenue aux intempéries $\Delta\sigma s$ et l'aimantation de saturation $\sigma s$ vérifie la formule suivante (1) :

$$\Delta\sigma s \ \leq \ 0{,}8 \ x \ \sigma s \ - \ 30... \ (1)$$

où $\Delta\sigma s$ est définie par la formule suivante (2) :

$$\Delta\sigma s \ = \ (\sigma s - \sigma s_1)/\sigma s \ x \ 100... \ (2)$$

où $\sigma s$ représente l'aimantation de saturation de la poudre magnétique ($Am^2$/kg), $\sigma s_1$ représente l'aimantation de saturation de la poudre magnétique maintenue dans une atmosphère de 60°C et 90 % d'humidité relative pendant

1 semaine (Am$^2$/kg).

2. Procédé de fabrication d'une poudre magnétique à base de nitrure de fer selon la revendication 1, comprenant la préparation d'une poudre de base comprenant principalement une phase de $Fe_{16}N_2$ par un procédé consistant à mettre une poudre α-Fe dans un réacteur et à la maintenir à l'intérieur pendant plusieurs dizaines d'heures avec un gaz contenant de l'azote maintenu en circulation à une température pas supérieure à 200°C, à réaliser une réduction graduelle par exposition des particules de poudre de base ayant une phase principale de $Fe_{16}N_2$ à un gaz réducteur pour réduire partiellement la région de surface des particules, produisant ainsi des particules de poudre ayant une phase Fe métallique dans leur couche superficielle, suivie d'une oxydation graduelle en exposant les particules de poudre produites à un gaz oxydant pour oxyder au moins partiellement la surface de la phase Fe métallique, produisant ainsi des particules de poudre ayant une phase d'oxyde dans leur couche la plus externe.

3. Support d'enregistrement magnétique, la couche magnétique comprenant la poudre magnétique à base de nitrure de fer de la revendication 1.

Fig. 1

Fig. 2

**REFERENCES CITED IN THE DESCRIPTION**

**Patent documents cited in the description**

- JP 2000277311 A
- WO 03079333 A
- JP 2005268389 A
- JP 11340023 A
- US 4791021 A
- JP 5222483 A